# EUROPEAN PATENT APPLICATION

(11) **EP 4 521 347 A1**
(43) Date of publication of application: **12.03.2025**
(21) Application number: 23799671.5
(22) Date of filing: 03.05.2023
(51) Int. Cl.: G06T 7/571, H04N 13/271, H04N 13/207, G03B 13/20, H04N 5/77, H04N 23/959, H04N 23/67, G03B 13/36

(54) **APPARATUS AND METHOD FOR IMAGE ANALYSIS**

(30) Priority: 04.05.2022 KR 20220055392; 20.09.2022 KR 20220118616
(71) Applicant: Hanwha Vision Co., Ltd., Seongnam-si, Gyeonggi-do 13488 (KR)
(72) Inventor: PARK, Dong Jin, Seongnam-si Gyeonggi-do 13488 (KR); KIM, Dae Bong, Seongnam-si Gyeonggi-do 13488 (KR); KWON, Young Sang, Seongnam-si Gyeonggi-do 13488 (KR); KIM, Hyuck Rae, Seongnam-si Gyeonggi-do 13488 (KR)
(74) Representative: Gulde & Partner
(86) International application number: PCT/KR2023/006027
(87) International publication number: WO 2023/214790

(57) **Abstract**

The present invention relates to an apparatus and method for image analysis and more specifically, relates to an apparatus and method for image analysis in which an absolute distance for a partial region of an image is calculated by using an auto focusing function, and the absolute distance is applied to an output of a depth map so as to calculate absolute distances for the remaining regions. The apparatus for image analysis according to an embodiment of the present disclosure includes: an imaging unit generating a captured image; a depth map generation unit generating a depth map for the captured image; and a map analysis unit calculating an absolute distance for an entire region of the depth map by referring to an absolute distance calculated for a selected region of the entire region of the depth map, wherein the map analysis unit calculates the absolute distance for the selected region using an auto focus function of the imaging unit.

## Description

### [Technical Field]

The present invention relates to an apparatus and method for image analysis and more specifically, relates to an apparatus and method for image analysis in which an absolute distance for a partial region of an image is calculated by using an auto focusing function, and the absolute distance is applied to an output of a depth map so as to calculate absolute distances for the remaining regions.

### [Background Art]

A depth map represents information that includes a distance between an observation point and an object. Since the depth map includes distance information between the observation point and each surface of the object, it is possible to calculate a three-dimensional image of the object using the depth map.

On the other hand, since the depth map includes only relative distance information between the observation point and the object, an absolute distance of the object included in the depth map may not be calculated through the depth map.

Therefore, there is a need for an invention that may calculate the absolute distance of the object included in the depth map.

### [Disclosure]

### [Technical Problem]

Aspects of the present disclosure provide an apparatus and method for image analysis and more specifically, relates to an apparatus and method for image analysis in which an absolute distance for a partial region of an image is calculated by using an auto focusing function, and the absolute distance is applied to an output of a depth map so as to calculate absolute distances for the remaining regions.

Aspects of the present disclosure are not limited to the above-mentioned aspects. That is, other aspects that are not mentioned may be obviously understood by those skilled in the art from the following specification.

### [Technical Solution]

According to an aspect of the present disclosure, there is provided an apparatus for image analysis including: an imaging unit generating a captured image; a depth map generation unit generating a depth map for the captured image; and a map analysis unit calculating an absolute distance for an entire region of the depth map by referring to an absolute distance calculated for a selected region of the entire region of the depth map, wherein the map analysis unit calculates the absolute distance for the selected region using an auto focus function of the imaging unit.

The imaging unit includes a monocular camera.

The depth map includes relative distance information of objects included in the captured image.

The map analysis unit includes: an absolute distance calculation unit dividing the depth map into a plurality of regions to generate divided regions, and calculating an absolute distance using the auto focus function of the imaging unit for at least two reference regions selected from the divided regions; and a distance conversion unit converting a relative distance for the entire region of the depth map into an absolute distance according to a ratio of the relative distance and the absolute distance of each of the at least two reference regions.

The absolute distance calculation unit selects a region having a relative distance included within a preset range among the entire region of the depth map as a reference region.

The absolute distance calculation unit excludes a region having a minimum relative value or a maximum relative distance value among the divided regions from the selection of the reference region.

When a variance or standard deviation of relative distance values that constitute the divided regions exceeds a preset threshold, the absolute distance calculation unit excludes the corresponding divided region from the selection of the reference region.

The absolute distance calculation unit determines the number of reference regions by referring to a distribution of relative distance values constituting the depth map.

The absolute distance calculation unit increases the number of reference regions as the variation or standard deviation of the relative distance values constituting the depth map increases.

The absolute distance calculation unit is configured to: generate a depth map array in which a plurality of relative distances for the plurality of divided regions are listed in order of size, divide the depth map array into a plurality of depth map groups according to the size of the relative distance, select a reference map group that serves as a selection reference for the reference region among the plurality of depth map groups, extract a relative distance from the reference map group, and select a divided region corresponding to the relative distance extracted from the reference map group as the reference region.

The absolute distance calculation unit extracts a minimum relative distance, a maximum relative distance, or a middle relative distance among the relative distances of the reference map group.

The absolute distance calculation unit extracts the smallest relative distance and the largest relative distance excluding the minimum relative distance and the maximum relative distance among the relative distances of the reference map group.

The absolute distance calculation unit determines the number of relative distances extracted from the reference map group by referring to the dispersion or standard deviation of the relative distances constituting the reference map group.

The absolute distance calculation unit is configured to: perform auto focus on the capturing region of the captured image corresponding to the reference region, and calculate the absolute distance of the reference region by referring to a position of a focus lens of the imaging unit that maximally forms the sharpness of an auto focus image formed by performing the auto focus.

The absolute distance calculation unit is configured to: perform auto focus on an enlarged capturing region corresponding to the reference region and a peripheral region of the reference region of the captured image, and calculate the absolute distance of the reference region by referring to a position of a focus lens of the imaging unit that maximally forms the sharpness of an auto focus image formed by performing the auto focus.

The absolute distance calculation unit is configured to: perform a first auto focus on an enlarged capturing region corresponding to the reference region and a peripheral region of the reference region of the captured image, perform a second auto focus on a reference focus region corresponding to the reference region of an auto focus image by the first auto focus, and calculate an absolute of the reference region by referring to a position of a focus lens of the imaging unit that maximally forms the sharpness of a first auto focus image formed by performing the first auto focus and the sharpness of a second auto focus image formed by performing the second auto focus.

The depth map generation unit converts a resolution of the captured image to correspond to a preset resolution of a depth map, and generates the depth map using the converted captured image.

According to another aspect of the present disclosure, there is provided a method for image analysis including: generating a captured image; generating a depth map for the captured image; calculating an absolute distance using an auto focus function of an imaging unit that generates the captured image for a selected region of an entire region of the depth map; and calculating an absolute distance for the entire region of the depth map by referring to the calculated absolute distance.

The calculating of the absolute distance includes: dividing the depth map into a plurality of regions to generate divided regions, and calculating an absolute distance using the auto focus function of the imaging unit for at least two reference regions selected from the divided regions; and converting a relative distance for the entire region of the depth map into an absolute distance according to a ratio of the relative distance and the absolute distance of each of the at least two reference regions.

The calculating of the absolute distance includes selecting a region having a relative distance included within a preset range among the entire region of the depth map as a reference region.

The details of other embodiments are included in the detailed description and drawings.

### [Advantageous Effects]

According to the apparatus and method for image analysis of the present disclosure as described above, since the absolute distance for a region of the image is calculated using the auto focusing function and the absolute distance is applied to a result of the depth map to calculate the absolute distance for the remaining region, the absolute distance of all objects included in the depth map may be calculated.

The effects of the present disclosure are not limited to the effects mentioned above, and other effects not mentioned will be clearly understood by those skilled in the art from the description of the claims.

### [Description of Drawings]

FIG. 1 is a block diagram of an apparatus for image analysis according to an embodiment of the present disclosure;
FIG. 2 is a block diagram of a map analysis unit;
FIG. 3 is a diagram illustrating a captured image;
FIG. 4 is a diagram illustrating a depth map of the captured image;
FIG. 5 is a diagram illustrating that the depth map is divided into a plurality of regions;
FIG. 6 is a diagram illustrating that a reference region is selected;
FIG. 7 is a diagram illustrating reference points displayed on a distance coordinate plane;
FIG. 8 is a diagram illustrating that a reference graph is formed based on the reference points;
FIG. 9 is a diagram illustrating that a reference graph is formed based on three reference points;
FIG. 10 is a diagram illustrating a depth map array;
FIG. 11 is a diagram for describing that an auto focus image is generated for a capturing region;
FIG. 12 is a diagram for describing that an auto focus image is generated for an enlarged capturing region;
FIG. 13 is a diagram for describing that an auto focus image is generated for the capturing region and the enlarged capturing region; and
FIG. 14 is a flowchart illustrating a method for image analysis according to an embodiment of the present disclosure.

### [Mode for Invention]

Hereinafter, embodiments of the present disclosure will be described in detail with reference to the accompanying drawings. Advantages and features of the present disclosure, and a method for achieving the advantages and features will become apparent with reference to the embodiments described below in detail in conjunction with the accompanying drawings. However, the present disclosure is not limited to the embodiments disclosed below, but may be implemented in a variety of different forms, these embodiments will be provided only in order to make the present disclosure complete and allow those skilled in the art to completely recognize the scope of the present disclosure, and the present disclosure is only defined by the scope of the claims. The same reference numbers indicate the same components throughout the specification.

Unless defined otherwise, all terms (including technical and scientific terms) used in the present specification have the same meaning as meanings commonly understood by those skilled in the art to which the present disclosure pertains. In addition, terms defined in generally used dictionaries are not ideally or excessively interpreted unless specifically defined clearly.

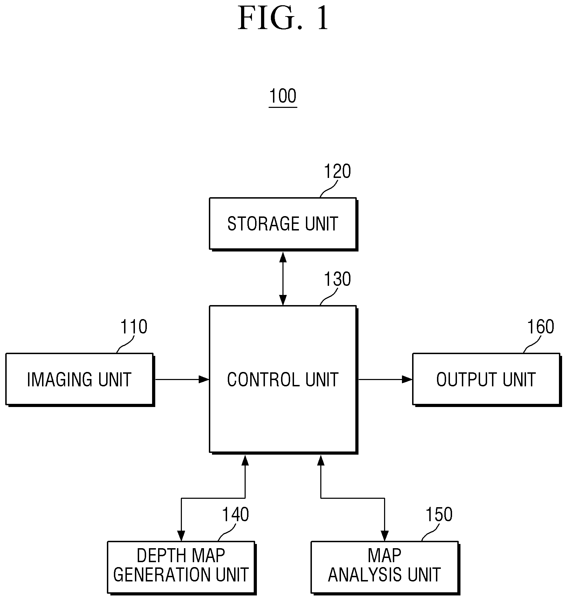

FIG. 1 is a block diagram of an apparatus for image analysis according to an embodiment of the present disclosure.

Referring to FIG. 1, an apparatus 100 for image analysis according to an embodiment of the present disclosure is configured to include an imaging unit 110, a storage unit 120, a control unit 130, a depth map generation unit 140, a map analysis unit 150, and an output unit 160.

The imaging unit 110 may generate a captured image. For example, the imaging unit 110 may be a camera equipped with an image sensor such as a complementary metal-oxide-semiconductor (CMOS) or a charge-coupled device (CCD).

In the present disclosure, the imaging unit 110 may be a monocular camera. The captured image generated by the imaging unit 110 represents an image captured at one capturing point.

In addition, the imaging unit 110 may be equipped with a lens unit (not illustrated) capable of auto focus. As described below, the imaging unit 110 may perform auto focus under the control of the map analysis unit 150.

In addition, the imaging unit 110 may be capable of adjusting a capturing direction. For example, the imaging unit 110 may include a pan tilt equipment (not illustrated). The pan tilt equipment may adjust the capturing direction of the imaging unit 110 by an input control signal.

The storage unit 120 may temporarily or permanently store the captured image generated by the imaging unit 110. In addition, the storage unit 120 may store a depth map generated by the depth map generation unit 140 and may also store an analysis result generated by the map analysis unit 150.

The depth map generation unit 140 serves to generate a depth map for the captured image generated by the imaging unit 110. For example, the depth map generation unit 140 may generate the depth map of the captured image generated by the imaging unit 110, which is the monocular camera, using a deep learning-based model.

The depth map may include relative distance information of objects included in the captured image. The depth map may include the relative distance information between the objects included in the image, as well as relative distance information across surfaces that constitute each of the objects. For example, the depth map may be understood as including relative distance information for all pixels included in the captured image. By using the relative distance information of the objects, it is possible to estimate not only the arrangement relationship between the objects but also a three-dimensional shape of each object.

Alternatively, according to some embodiments of the present disclosure, the depth map generation unit 140 may generate a depth map using an artificial intelligence model and then convert the depth map by reflecting characteristics of a focus lens (not illustrated) equipped in the imaging unit 110. More specifically, an absolute distance between the object captured by the imaging unit 110 and the imaging unit 110 is calculated by referring to a position of the focus lens. In this case, the depth map generation unit 140 may convert the depth map so that the amount of change between the position of the focus lens and the absolute distance is reflected.

In addition, the depth map generation unit 140 may generate a depth map using at least one artificial intelligence model selected from among a plurality of different artificial intelligence models. The plurality of artificial intelligence models may generate optimal depth maps in different situations. For example, a first artificial intelligence model may generate an optimal depth map for an image including a daytime scene, and a second artificial intelligence model may generate an optimal depth map for an image including a nighttime scene. Alternatively, a third artificial intelligence model may generate an optimal depth map for an image including people or animals, and a fourth artificial intelligence model may generate an optimal depth map for an image including natural environments. The depth map generation unit 140 may select at least one of the plurality of artificial intelligence models by referring to capturing conditions by the imaging unit 110 and generate a depth map using the selected artificial intelligence model.

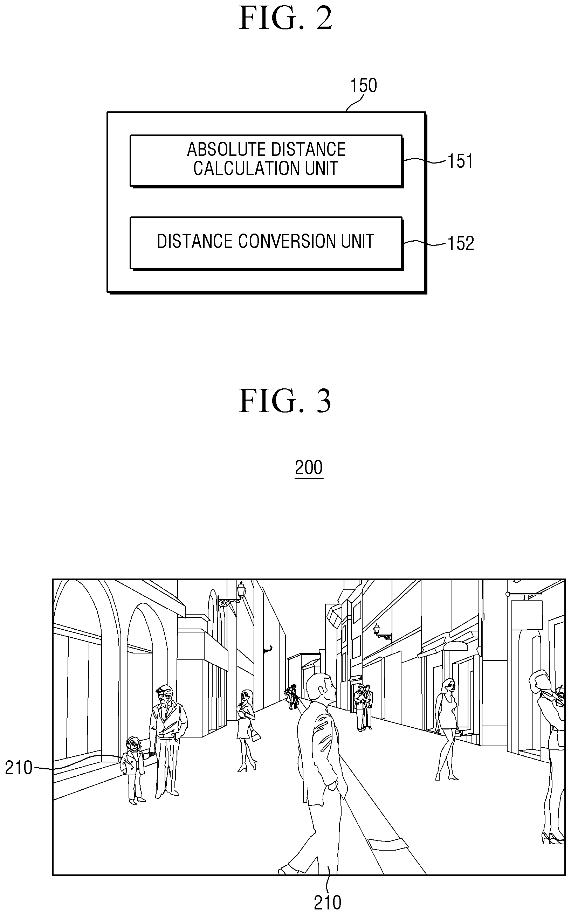

The map analysis unit 150 serves to analyze the depth map and calculate an absolute distance for an entire region of the depth map. Specifically, the map analysis unit 150 may calculate the absolute distance for the entire region of the depth map by referring to an absolute distance calculated for a selected region among the entire region of the depth map. Here, the map analysis unit 150 may calculate the absolute distance for the selected region by using the auto focus function of the imaging unit 110. The detailed configuration and function of the map analysis unit 150 will be described later with reference to FIGS. 2 to 6.

The output unit 160 may output an analysis result of the map analysis unit 150. A user may check the absolute distance for the entire region of the captured image by referring to the analysis result of the map analysis unit 150.

The control unit 130 performs overall control of the imaging unit 110, the storage unit 120, the depth map generation unit 140, the map analysis unit 150, and the output unit 160.

FIG. 2 is a block diagram of a map analysis unit.

Referring to FIG. 2, the map analysis unit 150 is configured to include an absolute distance calculation unit 151 and a distance conversion unit 152.

The absolute distance calculation unit 151 serves to divide the depth map into a plurality of regions and calculates an absolute distance of at least two reference regions selected from the divided regions. The calculation of the absolute distance of the reference region may be performed using the auto focus function of the imaging unit 110.

Before calculating the absolute distance of the reference region, the absolute distance calculation unit 151 may calculate a relative distance for each divided region. Hereinafter, the relative distance for the divided region is called a region relative distance.

The region relative distance may be determined as an average value or median value of the relative distances included in the divided regions. Here, the average value represents a value obtained by dividing the sum of all relative distances included in the divided regions by the number of relative distances, and the median value represents a value corresponding to the middle of a distribution of relative distances included in the divided regions. Alternatively, the median value may represent a relative distance of a center pixel of the divided region. However, in the present disclosure, it is exemplary that the region relative distance is determined as the average value or median value of the relative distances included in the divided regions, and various values representing the divided regions may be determined as the region relative distance. The case in which the region relative distance is determined as the average value or median value of the divided regions will be mainly described.

As described above, the depth map may include the relative distance information for each pixel. For example, a value corresponding to a relative distance (hereinafter, referred to as a relative distance value) may be assigned to all pixels included in the depth map. The relative distance value may be set to increase or decrease as a distance between a specific point of the object corresponding to the pixel and the capturing point is closer. Hereinafter, the case in which the relative distance value increases as the distance between the specific point of the object and the capturing point is closer will be mainly described.

Each of the divided regions selected by the absolute distance calculation unit 151 may include a plurality of pixels, and a relative distance value may be set for each pixel. The absolute distance calculation unit 151 may determine an average value or median value of the relative distance values of all pixels included in each divided region as the region relative distance of the corresponding divided region.

The absolute distance calculation unit 151 may select at least two reference regions. The reference region may be used to convert the relative distance for the entire region of the depth map into the absolute distance. To convert the distance for the entire region of the depth map, the absolute distance calculation unit 151 may calculate the absolute distance of the reference region by using the auto focus function of the imaging unit 110.

The lens unit equipped in the imaging unit 110 may be equipped with a movable focus lens (not illustrated) to adjust the focus. The sharpness of a specific region of the captured image may be increased by moving the focus lens. A correlation may be established between a position of the focus lens for maximally improving the sharpness and a distance to the object corresponding to that region. When using such a correlation, it is possible to calculate the absolute distance between the capturing point and the corresponding object using the position of the focus lens.

The absolute distance calculation unit 151 may calculate the absolute distance to the object included in the reference region by performing the auto focus of the imaging unit 110 for the reference region and referring to the position of the focus lens at this time.

The distance conversion unit 152 serves to convert the relative distance for the entire region of the depth map into the absolute distance according to the ratio of the relative distance and the absolute distance of each of at least two reference regions. When the relative and absolute distances for two or more reference regions are confirmed, the ratio between the relative and absolute distances for the entire depth map may be calculated. The distance conversion unit 152 may calculate the absolute distance of each region by applying the relative distance of the entire region constituting the depth map to the ratio between the relative distance and the absolute distance.

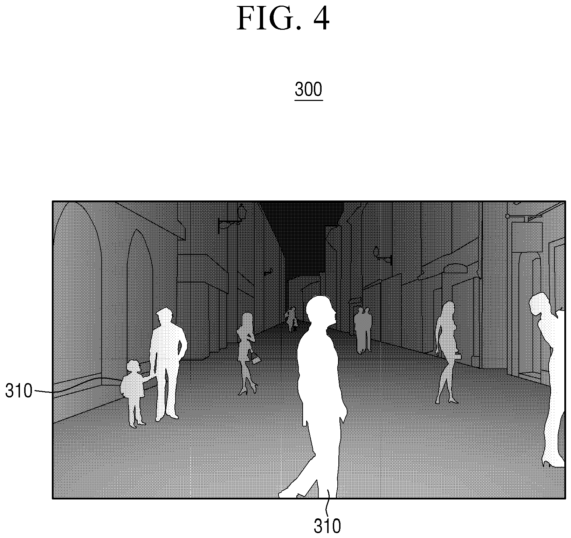

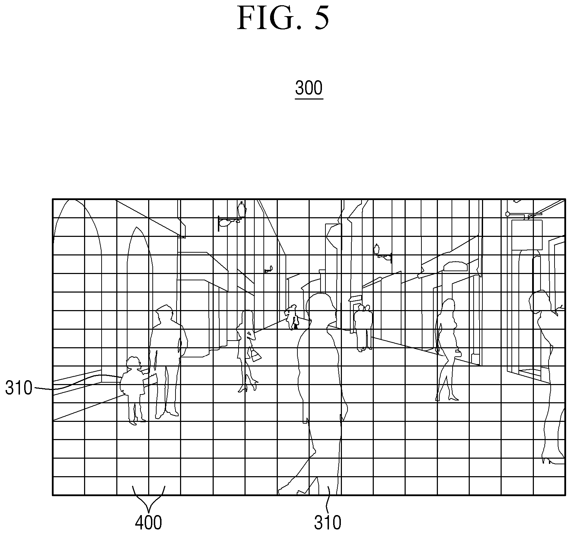

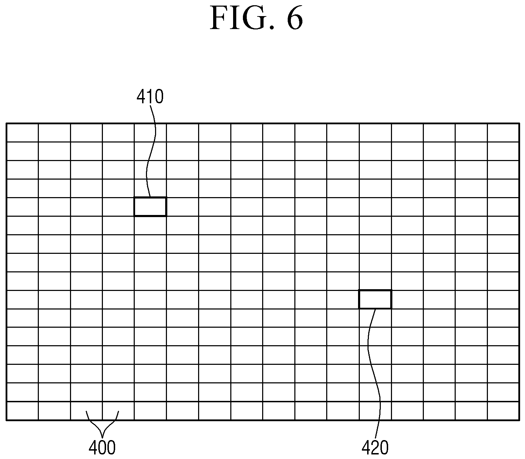

FIG. 3 is a diagram illustrating a captured image, FIG. 4 is a diagram illustrating a depth map of the captured image, FIG. 5 is a diagram illustrating that the depth map is divided into a plurality of regions, and FIG. 6 is a diagram illustrating that a reference region is selected.

Referring to FIG. 3, the imaging unit 110 may capture the front and generate a captured image 200.

The captured image 200 may include at least one object 210. The object 210 may include a person, an animal, a vehicle, or a building. The captured image 200, which is generated by the imaging unit 110, may be a still image or one of a plurality of scenes included in a moving image.

Referring to FIG. 4, the depth map generation unit 140 may generate a depth map 300 for the captured image 200.

The depth map 300 may include relative distance information of an object 310. The relative distance information represents a value in which a distance between each point included in the depth map 300 and the capturing point is relatively determined.

In the present disclosure, a resolution of the depth map 300 that may be processed by the map analysis unit 150 may be different from a resolution of the captured image 200. In this case, the depth map generation unit 140 may convert the resolution of the captured image 200 to correspond to a preset resolution of the depth map 300, and may generate the depth map 300 using the converted captured image.

Referring to FIG. 5, the absolute distance calculation unit 151 may divide the depth map 300 into a plurality of regions.

The horizontal and vertical sizes of each of the plurality of divided regions 400 may be the same. The size of the divided regions 400 may be a size at which the auto focus by the imaging unit 110 is smoothly performed.

The absolute distance calculation unit 151 may calculate a region relative distance for each of the divided regions 400. The region relative distance may be determined as the average value or median value of the relative distance values of all pixels included in each divided region 400.

Referring to FIG. 6, the absolute distance calculation unit 151 may select a reference region 410. The reference region 410 may be a specific region among the plurality of divided regions 400.

The absolute distance calculation unit 151 may select a region having a relative distance included in a preset range among the entire regions of the depth map 300 as the reference region 410. For example, the absolute distance calculation unit 151 may exclude a divided region 400 having the largest or smallest relative distance among the entire divided regions 400 from selection of the reference region 410.

Alternatively, the absolute distance calculation unit 151 may select the reference region 410 from among the divided regions 400 having a region relative distance included between an upper relative distance value and a lower relative distance value. Here, the upper relative distance value represents a relative distance value that is lower by a preset value from the highest region relative distance in the distribution of the overall region relative distances, and the lower relative distance value represents a relative distance value that is higher by a preset value than the lowest region relative distance in the distribution of the overall region relative distances.

The absolute distance calculation unit 151 may exclude a region having a minimum or maximum relative distance value among the entire divided regions 400 from the selection of the reference region 410. For example, when the relative distance value is set to a resolution of 8 bits, the minimum relative distance value may be 0 and the maximum relative distance value may be 255. The minimum or maximum relative distance value may be understood as a noise or saturated value rather than a normal relative distance value. Therefore, when the region relative distance of the divided regions 400 is calculated by reflecting the minimum relative distance value or the maximum relative distance, the reliability of the region relative distance may be reduced. As the region having the minimum relative distance value or the maximum relative distance value is excluded from the selection of the reference region 410, a reference region 410 having a high reliability region relative distance may be selected.

The absolute distance calculation unit 151 may select a reference region 410 by referring to the distribution of relative distance values constituting the divided regions 400. For example, when the variation or standard deviation of the relative distances constituting the divided regions 400 exceeds a preset threshold, the absolute distance calculation unit 151 may exclude the corresponding divided region 400 from selection of the reference region 410. When the variation or standard deviation of the relative distance values constituting the divided regions 400 exceeds a threshold, it may be understood that a plurality of objects having various distances are included in the corresponding divided region 400. In this case, it may not be desirable to select the corresponding divided region 400 as the reference region 410 because the absolute distance of the object included in the corresponding divided region 400 is not clear. Accordingly, the absolute distance calculation unit 151 may select the reference region 410 from among the divided regions 400 composed of relative distance values whose variance or standard deviation is a threshold or less.

As described above, the imaging unit 110 may include a pan tilt equipment. The pan tilt equipment may adjust the capturing direction of the imaging unit 110 within a preset driving range. The absolute distance calculation unit 151 may select a region included in the driving range of the pan tilt equipment among the entire divided regions 400 as the reference region 410. Specifically, when the pan tilt equipment may be driven so that the imaging unit 110 faces a direction corresponding to a specific region among the entire divided regions 400 and it is possible to zoom in on the corresponding region by auto focus in such a state, the absolute distance calculation unit 151 may select the corresponding region as the reference region 410.

In the present disclosure, the reference region 410 may be used to calculate the absolute distance of another divided region 400. Therefore, when the relative distance of the selected reference region 410 is not appropriate, the reliability of the absolute distance of another divided region 400 may be reduced. As the region having the relative distance included in the preset range is selected as the reference region 410, the reliability of the absolute distance of another divided region 400 determined based on such a selection may be improved.

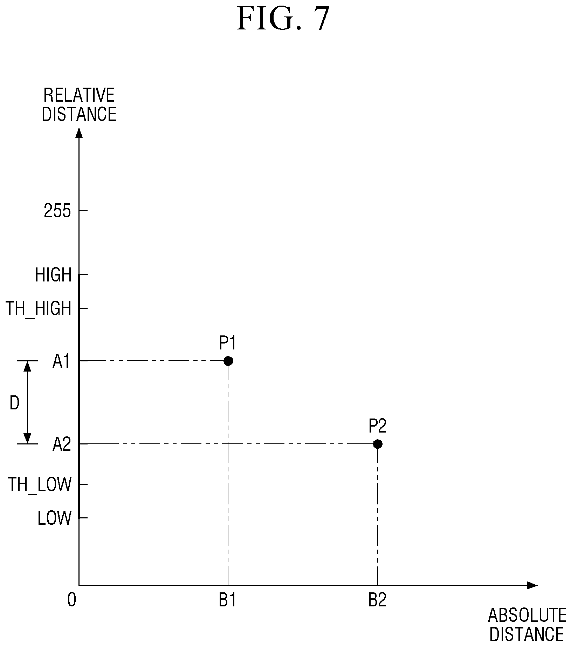

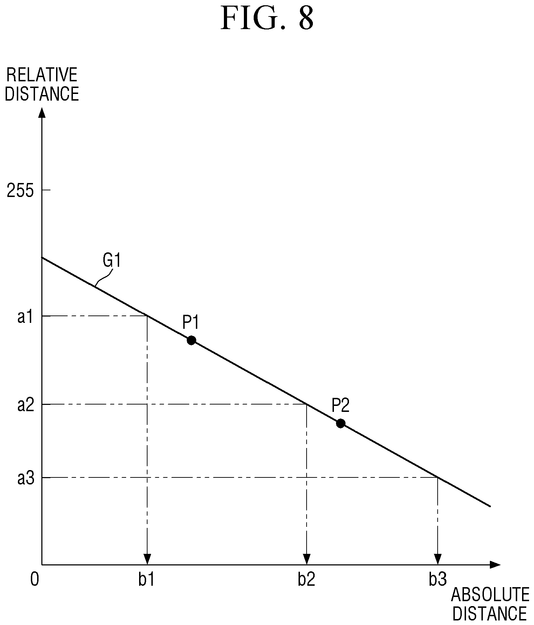

FIG. 7 is a diagram illustrating reference points displayed on a distance coordinate plane and FIG. 8 is a diagram illustrating that a reference graph is formed based on the reference points.

Referring to FIG. 7, the absolute distance calculation unit 151 may display reference points P1 and P2 on a distance coordinate plane.

The distance coordinate plane may be formed by a horizontal axis representing an absolute distance and a vertical axis representing a relative distance. The reference points P1 and P2 represent coordinate points on the distance coordinate plane corresponding to the reference region 410.

The absolute distance calculation unit 151 may first check a maximum region relative distance HIGH and a minimum region relative distance LOW among the entire region relative distances. In addition, the absolute distance calculation unit 151 may exclude a divided region 400 having the maximum region relative distance HIGH or having the minimum region relative distance LOW among the entire divided regions 400 from the selection of the reference region 410. Alternatively, the absolute distance calculation unit 151 may select the reference region 410 from among the divided regions 400 having a region relative distance included between an upper relative distance value TH_HIGH and a lower relative distance value TH_LOW. The upper relative distance value TH_HIGH may be determined as a value smaller than the maximum region relative distance HIGH by a preset interval, and the lower relative distance value TH_LOW may be determined as a value greater than the minimum region relative distance LOW by a preset interval.

In addition, the absolute distance calculation unit 151 may select a reference region 410 so that a relative distance between different reference regions 410 is formed to be a preset interval or more. FIG. 7 illustrates that a relative distance interval between two reference regions 410 is D.

When the reference region 410 is selected, the absolute distance calculation unit 151 may cause the imaging unit 110 to perform auto focus on the reference region 410. When the auto focus of the imaging unit 110 is completed, the absolute distance calculation unit 151 may calculate an absolute distance of the object corresponding to the reference region 410 by referring to the position of the focus lens.

When the relative distance and absolute distance to the reference region 410 are confirmed, the reference points P1 and P2 corresponding to the reference region 410 may be displayed on the distance coordinate plane. FIG. 7 illustrates two reference points P1 and P2 for two reference regions 410 displayed on the distance coordinate plane. As the relative distance and absolute distance of the first reference region are A1 and B1, respectively, a first reference point P1 may be displayed on the distance coordinate plane based on the relative distance and absolute distance of the first reference region. Similarly, as the relative distance and absolute distance of the second reference region are A2 and B2, respectively, a second reference point P2 may be displayed on the distance coordinate plane based on the relative distance and absolute distance of the second reference region.

Referring to FIG. 8, the distance conversion unit 152 may generate a reference graph G1 based on the reference points P1 and P2.

The reference graph G1 may be generated by connecting a plurality of reference points P1 and P2. FIG. 8 illustrates that a reference graph G1, which is a straight line, is generated by connecting two reference points P1 and P2.

The reference graph G1 reflects the ratio of the relative distance and the absolute distance of each reference region 410, and the distance conversion unit 152 may calculate the absolute distance of another divided region 400 by using the reference graph G1. Referring to FIG. 8, when the relative distance is a1, the absolute distance of the corresponding divided region 400 may be determined as b1, when the relative distance is a2, the absolute distance of the corresponding divided region 400 may be determined as b2, and when the relative distance is a3, the absolute distance of the corresponding divided region 400 may be determined as b3.

Through such a process, the distance conversion unit 152 may calculate the absolute distances of the entire divided regions 400 included in the entire depth map 300.

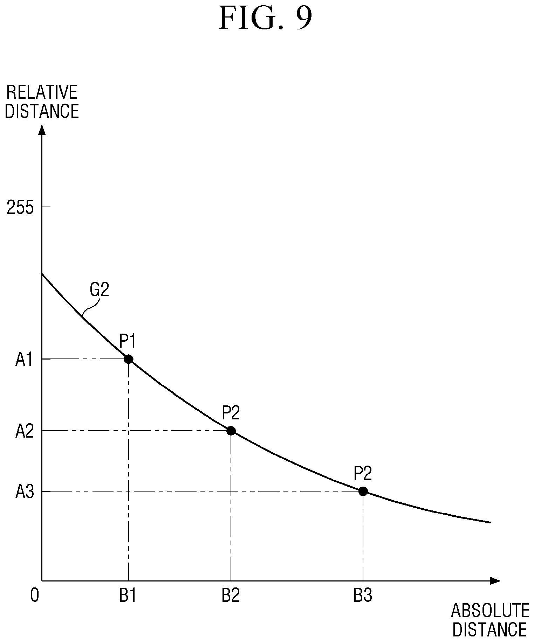

FIG. 9 is a diagram illustrating that a reference graph is formed based on three reference points.

Referring to FIG. 9, the absolute distance calculation unit 151 may select three or more reference regions 410.

When there are three reference regions 410, three reference points P1, P2, and P3 may be displayed on the distance coordinate plane, and a reference graph G2 generated based on the three reference points P1, P2, and P3 may be formed as a curved line rather than a straight line.

As the relative distance and absolute distance of the first reference region are A1 and B1, respectively, the first reference point P1 may be displayed on the distance coordinate plane based on the relative distance and absolute distance of the first reference region. As the relative distance and absolute distance of the second reference region are A2 and B2, respectively, a second reference point P2 may be displayed on the distance coordinate plane based on the relative distance and absolute distance of the second reference region. As the relative distance and absolute distance of the third reference region are A3 and B3, respectively, a third reference point P3 may be displayed on the distance coordinate plane based on the relative distance and absolute distance of the third reference region.

As the number of reference regions 410 increases, the ratio of the relative distance and the absolute distance of more reference regions 410 may be reflected to generate the reference graph G2. When the distance conversion is performed using the reference graph G2 generated based on more reference regions 410, the reliability of distance conversion may be improved.

The absolute distance calculation unit 151 may determine the number of reference regions 410 by referring to the distribution of relative distance values constituting the depth map 300. For example, the absolute distance calculation unit 151 may increase the number of reference regions 410, as the variation or standard deviation of the relative distance values constituting the depth map 300 increases. When the variation or standard deviation of the relative distance values constituting the depth map 300 increases, it may be understood that a plurality of objects having various distances are included in the captured image 200. In this case, the absolute distance that sufficiently reflects a difference between different relative distances may be calculated through the reference graph generated using a larger number of reference regions 410.

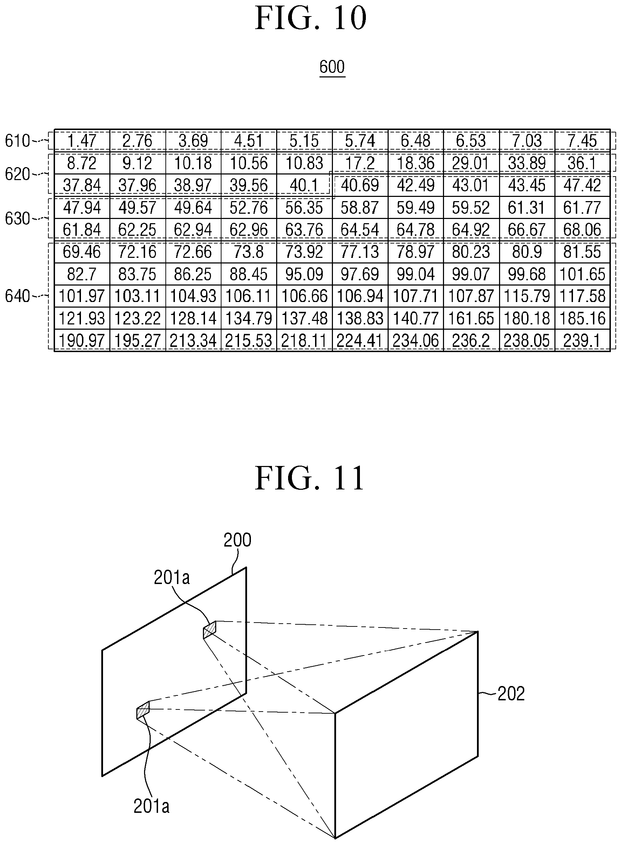

FIG. 10 is a diagram illustrating a depth map array.

Referring to FIG. 10, a depth map array 600 may include a plurality of relative distances listed in order of size.

The absolute distance calculation unit 151 may generate a depth map array 600 in which a plurality of relative distances for the plurality of divided regions 400 are listed in order of size. FIG. 10 illustrates that a depth map array 600 including 100 different relative distances in order of size is formed in the form of a table.

The absolute distance calculation unit 151 may divide the depth map array 600 into a plurality of depth map groups 610, 620, 630, and 640 according to the size of the relative distance. For example, the absolute distance calculation unit 151 may divide the depth map array 600 into four depth map groups 610 to 640 as illustrated in FIG. 10.

It may be understood that the smaller the relative distance, the corresponding object may exist at a relatively long distance, and the larger the relative distance, the corresponding object exists at a relatively short distance. The relative distance corresponding to the object existing at the long distance (hereinafter, referred to as a relative long distance) and the relative distance corresponding to the object existing at the short distance (hereinafter, referred to as a relative short distance) may provide different references for calculating the absolute distance. For example, even if a first relative long distance difference between different relative long distances and a second relative distance difference between different relative short distances are the same, a difference in absolute distance corresponding to the first relative distance difference may be formed to be larger than a difference in absolute distance corresponding to the second relative distance difference. Accordingly, the depth map group corresponding to the short distance may include a larger number of relative distances than the depth map group corresponding to the long distance among the plurality of depth map groups 610 to 640 included in the depth map array 600. For example, the size of the depth map groups 610 to 640 may be determined so that a difference in absolute distance corresponding to the difference between the maximum relative distance and the minimum relative distance of each of the depth map groups 610 to 640 is formed to be identical or similar for each of the depth map groups 610 to 640. FIG. 10 illustrates that a first depth map group 610 includes 10% of the entire relative distances, a second depth map group 620 includes 15% of the relative distances, a third depth map group 630 includes 25% of the relative distances, and a fourth depth map group 640 includes 50% of the relative distances.

The absolute distance calculation unit 151 may select a depth map group that serves as a selection reference for the reference region 410 among the plurality of depth map groups 610 to 640. For example, the absolute distance calculation unit 151 may select depth map groups that are not adjacent to each other among the plurality of depth map groups 610 to 640 as a selection reference for the reference region 410. For example, the absolute distance calculation unit 151 may select the first depth map group 610 and the third depth map group 630, or select the first depth map group 610 and the fourth depth map group 640, or select the second depth map group 620 and the fourth depth map group 640. Alternatively, the absolute distance calculation unit 151 may select all of the plurality of depth map groups 610 to 640 as the selection reference for the reference region 410. The depth map group that serves as the selection reference for the reference region 410 is called a reference map group.

When the selection of the reference map group is completed, the absolute distance calculation unit 151 may extract a relative distance from the reference map group and select a divided region 400 corresponding to the extracted relative distance as the reference region 410.

The absolute distance calculation unit 151 may extract a minimum relative distance, a maximum relative distance, or a middle relative distance among the relative distances of the reference map group, and select a divided region 400 corresponding to the extracted relative distance as the reference region 410. Alternatively, the absolute distance calculation unit 151 may extract the smallest relative distance and the largest relative distance, excluding the minimum relative distance and the maximum relative distance, among the relative distances of the reference map groups 610 to 640, and select a divided region 400 corresponding to the extracted relative distance as the reference region 410.

The absolute distance calculation unit 151 may determine the number of relative distances extracted from the reference map groups by referring to the variation or standard deviation of the relative distances constituting the reference map groups 610 to 640. For example, the absolute distance calculation unit 151 may extract a larger number of relative distances from the reference map groups 610 to 640, as the variation or standard deviation of the relative distances constituting the reference map groups increases. The number of reference regions 410 may be determined depending on the number of extracted relative distances.

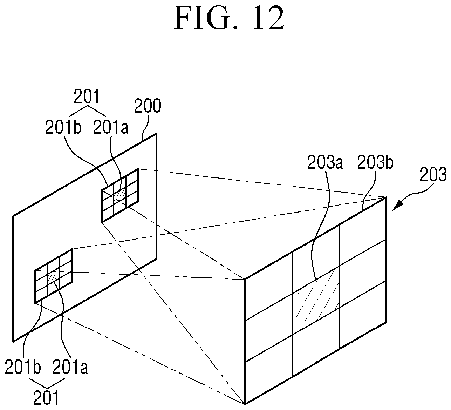

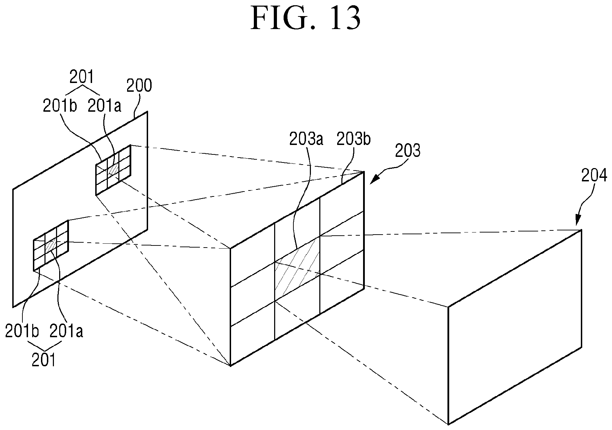

FIG. 11 is a diagram for describing that an auto focus image is generated for a capturing region, FIG. 12 is a diagram for describing that an auto focus image is generated for an enlarged capturing region, and FIG. 13 is a diagram for describing that an auto focus image is generated for the capturing region and the enlarged capturing region.

Referring to FIG. 11, the absolute distance calculation unit 151 may perform auto focus on reference capturing regions 201a of the captured image 200 corresponding to the reference regions 410.

Under the control of the absolute distance calculation unit 151, the imaging unit 110 may perform auto focus on the reference capturing region 201a corresponding to the reference region 410. Specifically, the imaging unit 110 may perform auto focus on a scene corresponding to the reference capturing region 201a.

FIG. 11 illustrates that auto focus is performed for two reference capturing regions 201a to generate an auto focus image 202. The auto focus image 202 may be an enlarged image of the reference capturing region 201a. The imaging unit 110 may sequentially perform the auto focus on the two reference capturing regions 201a. Accordingly, auto focus images 202 for the two reference capturing regions 201a may be sequentially generated.

The imaging unit 110 may perform the auto focus by moving the focus lens. The absolute distance calculation unit 151 may calculate an absolute distance of the reference region 410 by referring to a position of the focus lens of the imaging unit 110 that maximally improves the sharpness of the auto focus image 202 formed by performing the auto focus.

Referring to FIG. 12, the absolute distance calculation unit 151 may perform auto focus on an enlarged capturing region 201 corresponding to the reference region 410 and to a peripheral region of the reference region 410 of the captured image 200.

The enlarged capturing region 201 may include a reference capturing region 201a and a peripheral capturing region 201b. The reference capturing region 201a represents a region corresponding to the reference region 410, and the peripheral capturing region 201b represents a region corresponding to the peripheral region of the reference region 410.

Under the control of the absolute distance calculation unit 151, the imaging unit 110 may perform auto focus on the enlarged capturing region 201. The imaging unit 110 may perform auto focus on a scene corresponding to the enlarged capturing region 201.

FIG. 12 illustrates that auto focus images 203 for two enlarged capturing regions 201 are generated. The auto focus image 203 may include a reference focus region 203a and a peripheral focus region 203b. The reference focus region 203a represents an image in which the auto focus is performed for the reference capturing region 201a, and the peripheral focus region 203b represents an image in which the auto focus is performed for the peripheral capturing region 201b.

The imaging unit 110 may sequentially perform the auto focus on the two enlarged capturing regions 201. Accordingly, auto focus images 203 for the two enlarged capturing regions 201 may be sequentially generated.

The imaging unit 110 may perform the auto focus by moving the focus lens. The absolute distance calculation unit 151 may calculate an absolute distance of the reference region 410 by referring to a position of the focus lens of the imaging unit 110 that maximally improves the sharpness of the auto focus image 203 formed by performing the auto focus. Since the auto focus is performed on a scene corresponding to a larger enlarged capturing region 201 than on a scene corresponding to the reference capturing region 201a, it is possible to calculate the absolute distance at a faster speed. In addition, since information on the scene corresponding to not only the reference capturing region 201a but also the peripheral capturing region 201b adjacent thereto is reflected, the reliability of the calculated absolute distance may be improved.

Referring to FIG. 13, the absolute distance calculation unit 151 may perform a plurality of auto focuses for each reference region 410.

The absolute distance calculation unit 151 may perform a first auto focus on an enlarged capturing region 201 corresponding to the reference region 410 and the peripheral region of the reference region 410 of the captured image 200.

The enlarged capturing region 201 may include a reference capturing region 201a and a peripheral capturing region 201b. The reference capturing region 201a represents a region corresponding to the reference region 410, and the peripheral capturing region 201b represents a region corresponding to the peripheral region of the reference region 410.

Under the control of the absolute distance calculation unit 151, the imaging unit 110 may perform the first auto focus on the enlarged capturing region 201. The imaging unit 110 may perform the first auto focus on a scene corresponding to the enlarged capturing region 201.

FIG. 13 illustrates that auto focus images 203 for two enlarged capturing regions 201 are generated. The auto focus image 203 may include a reference focus region 203a and a peripheral focus region 203b. The reference focus region 203a represents an image in which the auto focus is performed for the reference capturing region 201a, and the peripheral focus region 203b represents an image in which the auto focus is performed for the peripheral capturing region 201b.

After the first auto focus is completed, the absolute distance calculation unit 151 may perform a second auto focus on the reference focus region 203a corresponding to the reference region 410 among the auto focus images 203 by the first auto focus.

Under the control of the absolute distance calculation unit 151, the imaging unit 110 may perform the second auto focus on the reference focus region 203a. The imaging unit 110 may perform the second auto focus on a scene corresponding to the reference focus region 203a.

The imaging unit 110 may perform the second auto focus after performing the first auto focus. This process may be repeated for each enlarged capturing region 201.

The imaging unit 110 may perform the auto focus by moving the focus lens. The absolute distance calculation unit 151 may calculate an absolute distance of the reference region 410 by referring to a position of the focus lens of the imaging unit 110 that maximally forms the sharpness of the first auto focus image 203 formed by performing the first auto focus and the sharpness of the second auto focus image 204 formed by performing the second auto focus. Since the absolute distance is calculated by comprehensively determining the position of the focus lens for the enlarged capturing region 201 and the position of the focus lens for the reference focus region 203a, the reliability of the calculated absolute distance may be improved.

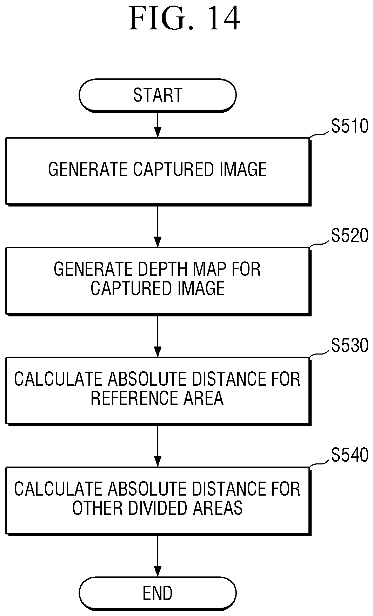

FIG. 14 is a flowchart illustrating a method for image analysis according to an embodiment of the present disclosure.

Referring to FIG. 14, in order to calculate an absolute distance of a captured image 200 of an imaging unit 110, which is a monocular camera, the imaging unit 110 may first generate the captured image 200 (S510).

A depth map generation unit 140 may generate a depth map 300 for the captured image 200 (S520), and an absolute distance calculation unit 151 of a map analysis unit 150 may calculate an absolute distance for a selected region (reference region) among the entire region of the depth map 300 by using an auto focus function of the imaging unit 110 (S530).

In addition, a distance conversion unit 152 of the map analysis unit 150 may calculate an absolute distance for the entire region of the depth map 300 by referring to the absolute distance calculated by the absolute distance calculation unit 151. The map analysis unit 150 may generate a reference graph by connecting at least two reference points on a distance coordinate plane, and may calculate an absolute distance of each divided region 400 by applying a relative distance of other divided regions 400 to the reference graph (S540).

Although the embodiments of the present disclosure have been described with reference to the accompanying drawings, those of ordinary skill in the art to which the present disclosure pertains will understand that the present disclosure may be embodied in other specific forms without changing the technical spirit or essential features thereof. Therefore, it should be understood that the embodiments described above are illustrative in all aspects and not restrictive.

## Claims

1. An apparatus for image analysis, the apparatus comprising:
an imaging unit generating a captured image;
a depth map generation unit generating a depth map for the captured image; and
a map analysis unit calculating an absolute distance for an entire region of the depth map by referring to an absolute distance calculated for a selected region of the entire region of the depth map,
wherein the map analysis unit calculates the absolute distance for the selected region using an auto focus function of the imaging unit.

2. The apparatus of claim 1, wherein the imaging unit includes a monocular camera.

3. The apparatus of claim 1, wherein the depth map includes relative distance information of objects included in the captured image.

4. The apparatus of claim 1, wherein the map analysis unit includes:
an absolute distance calculation unit dividing the depth map into a plurality of regions to generate divided regions, and calculating an absolute distance using the auto focus function of the imaging unit for at least two reference regions selected from the divided regions; and
a distance conversion unit converting a relative distance for the entire region of the depth map into an absolute distance according to a ratio of the relative distance and the absolute distance of each of the at least two reference regions.

5. The apparatus of claim 4, wherein the absolute distance calculation unit selects a region having a relative distance included within a preset range among the entire region of the depth map as a reference region.

6. The apparatus of claim 4, wherein the absolute distance calculation unit excludes a region having a minimum relative value or a maximum relative distance value among the divided regions from the selection of the reference region.

7. The apparatus of claim 4, wherein when a variance or standard deviation of relative distance values that constitute the divided regions exceeds a preset threshold, the absolute distance calculation unit excludes the corresponding divided region from the selection of the reference region.

8. The apparatus of claim 4, wherein the absolute distance calculation unit determines the number of reference regions by referring to a distribution of relative distance values constituting the depth map.

9. The apparatus of claim 8, wherein the absolute distance calculation unit increases the number of reference regions as the variation or standard deviation of the relative distance values constituting the depth map increases.

10. The apparatus of claim 4, wherein the absolute distance calculation unit is configured to:
generate a depth map array in which a plurality of relative distances for the plurality of divided regions are listed in order of size,
divide the depth map array into a plurality of depth map groups according to the size of the relative distance,
select a reference map group that serves as a selection reference for the reference region among the plurality of depth map groups,
extract a relative distance from the reference map group, and
select a divided region corresponding to the relative distance extracted from the reference map group as the reference region.

11. The apparatus of claim 10, wherein the absolute distance calculation unit extracts a minimum relative distance, a maximum relative distance, or a middle relative distance among the relative distances of the reference map group.

12. The apparatus of claim 10, wherein the absolute distance calculation unit extracts the smallest relative distance and the largest relative distance excluding the minimum relative distance and the maximum relative distance among the relative distances of the reference map group.

13. The apparatus of claim 10, wherein the absolute distance calculation unit determines the number of relative distances extracted from the reference map group by referring to the dispersion or standard deviation of the relative distances constituting the reference map group.

14. The apparatus of claim 4, wherein the absolute distance calculation unit is configured to:
perform auto focus on the capturing region of the captured image corresponding to the reference region, and
calculate the absolute distance of the reference region by referring to a position of a focus lens of the imaging unit that maximally forms the sharpness of an auto focus image formed by performing the auto focus.

15. The apparatus of claim 4, wherein the absolute distance calculation unit is configured to:
perform auto focus on an enlarged capturing region corresponding to the reference region and a peripheral region of the reference region of the captured image, and
calculate the absolute distance of the reference region by referring to a position of a focus lens of the imaging unit that maximally forms the sharpness of an auto focus image formed by performing the auto focus.

16. The apparatus of claim 4, wherein the absolute distance calculation unit is configured to:
perform a first auto focus on an enlarged capturing region corresponding to the reference region and a peripheral region of the reference region of the captured image,
perform a second auto focus on a reference focus region corresponding to the reference region of an auto focus image by the first auto focus, and
calculate an absolute of the reference region by referring to a position of a focus lens of the imaging unit that maximally forms the sharpness of a first auto focus image formed by performing the first auto focus and the sharpness of a second auto focus image formed by performing the second auto focus.

17. The apparatus of claim 1, wherein the depth map generation unit converts a resolution of the captured image to correspond to a preset resolution of a depth map, and generates the depth map using the converted captured image.

18. A method for image analysis, the method comprising:
generating a captured image;
generating a depth map for the captured image;
calculating an absolute distance using an auto focus function of an imaging unit that generates the captured image for a selected region of an entire region of the depth map; and
calculating an absolute distance for the entire region of the depth map by referring to the calculated absolute distance.

19. The method of claim 18, wherein the calculating of the absolute distance includes:
dividing the depth map into a plurality of regions to generate divided regions, and calculating an absolute distance using the auto focus function of the imaging unit for at least two reference regions selected from the divided regions; and
converting a relative distance for the entire region of the depth map into an absolute distance according to a ratio of the relative distance and the absolute distance of each of the at least two reference regions.

20. The method of claim 18, wherein the calculating of the absolute distance includes selecting a region having a relative distance included within a preset range among the entire region of the depth map as a reference region.
